# EUROPÄISCHE PATENTSCHRIFT

(11) **EP 0 450 459 B1**
(45) Veröffentlichungstag und Bekanntmachung des Hinweises auf die Patenterteilung: **26.07.1995**
(21) Anmeldenummer: 91104720.7
(22) Anmeldetag: 26.03.1991
(51) Int. Cl.: B09B 3/00

(54) **Verfahren und Vorrichtung zur biologischen Reinigung von verunreinigten Böden**
Method and device for the biological purification of contaminated soils
Procédé et installation d'épuration biologique des sols contaminés

(30) Priorität: 03.04.1990 DE 4010634
(43) Veröffentlichungstag der Anmeldung: 09.10.1991
(73) Patentinhaber: NOELL Abfall- und Energietechnik GmbH, D-41464 Neuss (DE)
(72) Erfinder: Röckelein, Michael, Dipl.-Ing., W-8700 Würzburg (DE); Kemps, Robert, Dr., W-3320 Salzgitter (DE)

(56) Entgegenhaltungen:
- EP-A- 0 379 121
- WO-A-89/06992
- DE-A- 3 720 833
- DE-A- 3 904 452

## Beschreibung

Gegenstand der vorliegenden Erfindung ist ein Verfahren zur biologischen Reinigung von mit Xenobiotica verunreinigten Böden sowie eine Vorrichtung zur Durchführung des Verfahrens.
Xenobiotica, insbesondere organische Kohlenwasserstoffverbindungen aliphatischer, alicyclischer und aromatischer Art, halogenierte Kohlenwasserstoffe, Phenole, Cyanide etc. führen in zunehmendem Maße zur Kontaminierung von Böden. Diese Kontaminierungen stellen eine Gefährdung der Umwelt dar und müssen möglichst bald und gründlich beseitigt werden. Bisher werden derartig kontaminierte Böden ausgebaggert und auf Sondermülldeponien entsorgt.

Aus der WO-A-89 06992 ist ein Verfahren zum Entfernen der Schadstoffe durch wäßrige Extraktion bekannt. Hierbei handelt es sich um eine mobile Bodenwaschanlage, bei der ein transportabler Mischer eingesetzt wird. Der Reaktor ist als rotierende Trommel mit entsprechenden Versorgungs- und Kontrolleinheiten ausgeführt.

Es ist auch schon thermische Behandlung, wie Pyrolyse, zur Anwendung gekommen. Diese Verfahren sind im allgemeinen aber sehr kostspielig. Eine weitere Sanierungstechnologie für kontaminierte Böden ist die bereits mehrfach angewendete biologische Bodenreinigung. Hierzu nutzt man entweder die bereits in diesem Boden natürlicherweise vorhandenen Mikroorganismen oder impft in die verunreinigten Böden eingebrachte spezielle Mikroorganismen an, insbesondere gezüchtete Hochleistungsstämme; vgl. **Umwelt 19 (1989), Seite 201**. Auch hierbei wird das verunreinigte Erdreich ausgehoben, auf eine dichte Unterlage aufgebracht und entweder regelmäßig gepflügt und bewässert oder als Regenerationsmiete aufgeschichtet und betrieben. Ein derartiges Verfahren ist beispielsweise in der DE-A-37 20 833 beschrieben, bei dem großräumige Spezialvorrichtungen erstellt werden und unter Beachtung entsprechender Vorsichts- und Schutzmaßnahmen die biologische Reinigung erfolgt. Andere Spezialvorrichtungen sind aus der DE-C-39 01 100 bekannt.

Nur in wenigen Fällen ist es möglich, auf das Ausheben des Erdreiches zu verzichten und die biologische Reinigung vor Ort durchführen zu können. In den meisten Fällen ist es unvermeidlich, die verunreinigten Böden auszuheben und intensiv zu bearbeiten. Die Durchführung dieser Verfahren ist zeitintensiv und erfordert größere Flächen sowie eine aufwendige Sicherung des Geländes zum Schutz des Grundwassers. Weiterhin ist es im allgemeinen nötig, die Anlage zu überdachen, um unkontrollierten Wasserzufluß durch Niederschläge einerseits und das Entweichen von toxischen Gasen andererseits zu vermeiden.

Die Erfindung hat sich die Aufgabe gestellt, derartige Verfahren zur biologischen Reinigung von mit Xenobiotika vereunreinigten Böden schneller, einfacher und sicherer durchzuführen und dabei eine platzsparende und genehmigungsrechtlich unbedenkliche Bodensanierung zu ermöglichen. Diese soll nach Möglichkeit in unmittelbarer Nähe der verunreinigten Böden durchgeführt werden.

Diese Aufgabe kann überraschend einfach, universell und preiswert dadurch gelöst werden, daß die Bodenvorbereitung, insbesondere die ausreichende Zerkleinerung, und danach die Reinigung mit Mikroorganismen in standardisierten, mobilen, stapelbaren, speziell geeigneten Reaktorbehältern erfolgt, wobei der verunreinigte Boden nach Aussonderung der groben Bodenfraktion in einem Silo-Dosier-Container (1), in einem Siebtrommel-Container (2) homogenisiert und die dabei abgetrennte Feinkornfraktion zur biologischen Reinigung dem Bioreaktor (6) zugeleitet wird. Besonders geeignet als Reaktorbehälter sind robuste und in der Handhabung einfache Edelstahlbehälter, die als Abroll- und/oder Absetz-Container oder ähnliche leicht transportable Behälter mit geeigneten handelsüblichen Fahrzeugen schnell und problemlos in die Nähe des verunreinigten Bodens gebracht werden können und dort zum Einsatz kommen. Neben den Reaktorbehältern können spezielle Silo-, Dosier-, Homogenisier-, Siebtrommel- und Mahlaggregate sowie Gebläse- und Filteraggregate aufgestellt werden, die der Bodenvorbereitung dienen und separat oder gemeinsam in Container eingebaut sind. Alle diese Container sind vorzugsweise nach ISO genormt und können auf realtiv engem Raum neben- und übereinander aufgestellt werden. Vorzugsweise weisen die Reaktorbehälter eine Sicketwasser-Kreislaufführung auf, die eine leichte und laufende Kontrolle des Schadstoffgehaltes, die Zugabe von Nährsalzen, Wuchsstoffen und Mikroorganismen und die Messung der den Abbauprozeß beeinflussenden chemischen Parameter zuläßt und eine optimale Prozeßführung sowie eine Automatisierung mit Prozeßleittechnik ermöglicht. In Abhängigkeit von der jeweiligen Verunreinigung kommen für die biologische Reinigung geeignete Mikroorganismen, wie autochthone oder allochthone anaerobe, vorzugsweise aerobe Bakterien oder Pilze, zur Anwendung. Die geeigneten Mikroorganismen können rasch durch geeignete Vorversuche ermittelt werden.

Die Sauerstoffversorgung der Mikroorganismen erfolgt vorzugsweise mittels einer Saugbelüftung über die Bodenfläche durch das Erdreich hindurch. Dies führt einerseits zur notwendigen Sauerstoffversorgung der Mikroorganismen und andererseits zu einer besonders gleichmäßigen Luftverteilung im Boden. Weiterhin ist es möglich, Schadstoffemissionen in die Umgebungsluft zu verhindern, da die abgesaugte Luft anschließend gereinigt werden kann. Bei erhöhten Schadstoffkonzentrationen im Boden kann eine intensivere Belüftung notwendig sein. Dies erfolgt dann beispielsweise durch das Anbringen weitere Belüftungsrohre in Längsrichtung durch das Erdreich. Das Belüftungssystem ist im allgemeinen über ein Rohrsystem mit einer Gebläsestation verbunden. Diese ist wiederum aus umwelttechnischen Gründen vorzugsweise mit einem Verdichter ausgerüstet, der mit einer schallschutz-wirksamen Haube abgedeckt ist.

Die Reinigung der Abluft kann beispielsweise durch Aktivkohle- oder Biofilter erfolgen. Als besonders geeignet haben sich Biofilter mit aktivem Stroh-/Pilz-Substrat erwiesen. Die Überwachung der Abluft auf Kontamination kann beispielsweise mit einem Photoionisationsdetektor erfolgen, der obendrein entstehende Metabolite mit überwachen kann.

Zur Vermeidung der Infiltration von Niederschlägen werden die Reaktoren vorzugsweise mit einem sogenannten "Hamburger Verdeck" ausgestattet. Dieses besteht aus abnehmbaren Längsspriegelrohren mit Plane und Planhaken. Um einen Luftzutritt zu ermöglichen, empfiehlt es sich, an den oberen Profilen des Reaktors Lüftungsschlitze mit Abdeckblechen anzubringen.

Eine Kontrolle des Schadstoffabbaus sowie Einflußnahmen auf den biologischen Reinigungsprozeß können beispielsweise auch über das Sickerwasser erfolgen, welches vorzugsweise im Kreislauf geführt wird. So ist es beispielsweise leicht möglich, Bodenfeuchte, ph-Wert und Sauerstoffkonzentration zu kontrollieren und damit ein geregeltes biologisches Wachstum zu gewährleisten. Bei anaeroben Prozessen können Nährstoffe und Zusätze, wie Nitrate und Sulfate, auch über das Sickerwasser zugesetzt werden. Sollte es zu Wachstumsstörungen oder gar zum Absterben der eingesetzten Mikroorganismen kommen, können diese ebenfalls über das Sickerwasser neu zugeführt werden. In gewisen Fällen kann es weiterhin sinnvoll sein, dem Sickerwasser Wasserstoffperoxid, Lösungsvermittler, wie Tenside oder leicht abbaubare Paraffinkohlenwasserstoffe, zuzusetzen, um das biologische Wachstum zu optimieren.

Die Förderung des Sickerwassers kann im Sickerwasserbehälter mit Hilfe einer Schwimmerschaltung erfolgen. Die Zuführung von Nährstoffen und Nährsalzen kann beispielsweise durch Tropfschläuche erfolgen.

Zur Durchführung des erfindungsgemäßen Verfahrens wird das ausgehobene Erdreich vorzugsweise in eine Dosiereinrichtung mit Förderschnecke gegeben ,welche zunächst alle Teile über 100 mm Durchmesser aussortiert. Diese oberhalb der Dosierschnecke anfallende Fraktion, bestehend beispielsweise aus Fundamentresten, Metallteilen, Holzstücken etc., wird separat behandelt und ggf. mit einem Brecher zerkleinert. Das gebrochene Material kann ggf. zusammen oder separat von dem übrigen Material in den Siebtrommel-Container eingegeben werden. Dies kann beispielsweise über einen verfahrbaren, in der Neigung verstellbaren Gurtbandförderer zur Einlaufschnurre des Siebtrommel-Containers erfolgen. In der Siebtrommel wird der verunreinigte Boden in zwei Fraktionen getrennt und dabei gleichzeitig homogenisiert. Der Schnitt kann beispielsweise bei 32 mm gewählt werden. In diese Siebtrommel kann zusätzlich eine die Sieblochung überdeckende Blindschaltung durch beispielsweise ein- bzw. auswechselbare ungelochte Bleche vorgenommen werden, so daß vor der eigentlichen Siebung eine Homogenisierung stattfindet. Außerdem kann durch diese Maßnahme eine unerwünschte Pelletisierung im Falle bindiger Bodenfraktionen vermieden werden. Bei diesem Verfahrensschritt erfolgt außer der Abtrennung zu grober Teilchen gleichzeitig eine Homogenisierung der feinen Teile.
Die größeren Teile können gewünschtenfalls ebenfalls über eine Mahl- oder Brecheranlage zerkleinert und erneut der Siebtrommel zugeführt werden.
Vom Siebtrommel-Container gelangt die nunmehr für den biologischen Abbau geeignete kontaminierte Bodenfraktion in ein Zwischenlager. Dies erfolgt beispielsweise über einen verfahrbaren, in der Neigung verstellbaren Gurtbandförderer. Von dem Zwischenlager aus werden beispielsweise mit Radlader oder Seilbagger die Reaktorbehälter befüllt. Sobald der Inhalt eines Reaktorbehälters ausreichend gereinigt ist, kann dieser auf ein Zwischenlager entleeert oder direkt zum Ursprungsort zurücktransportiert werden.

In der anliegenden Zeichnung ist ein typischer Verfahrensablauf dargestellt. In dieser Figur bedeuten:
1 ein Silo-Dosier-Container
2 ein Siebtrommel-Container
3 ein in der Neigung verstellbarer Gurtbandförderer zur Einlaufschnurre des Siebtrommel-Containers
4 Gurtbandförderer für die Fraktionen größer als 32 mm am Ende der Siebtrommel
5 das Zwischenlager für feinteiliges und homogenisiertes Material
6 Bioreaktoren
Eine derartige Anlage ist beispielsweise in der Lage, einen Volumenstrom von ca. 20 bis 25 m³/h aufzubereiten. Die biologische Reinigung hängt in erheblichem Maße von der Art der Verunreinigung und der zur Anwendung kommenden biologischen Methode ab. Gegebenenfalls kann die biologische Reinigung durch Aufstellung weiterer Reaktoren ein größeres Volumen umsetzen, während die Module für die Vorbereitung des Materials bis zum Zwischenlager schon wieder abfahren und anderenorts zum Einsatz kommen können. Auf alle Fälle gewährleistet dieses Verfahren, daß die Gesamtvorrichtung baukastenmäßig zusammengestellt werden kann und dabei platzsparend, mobil, sicher, leistungsfähig und umweltfreundlich arbeiten kann.

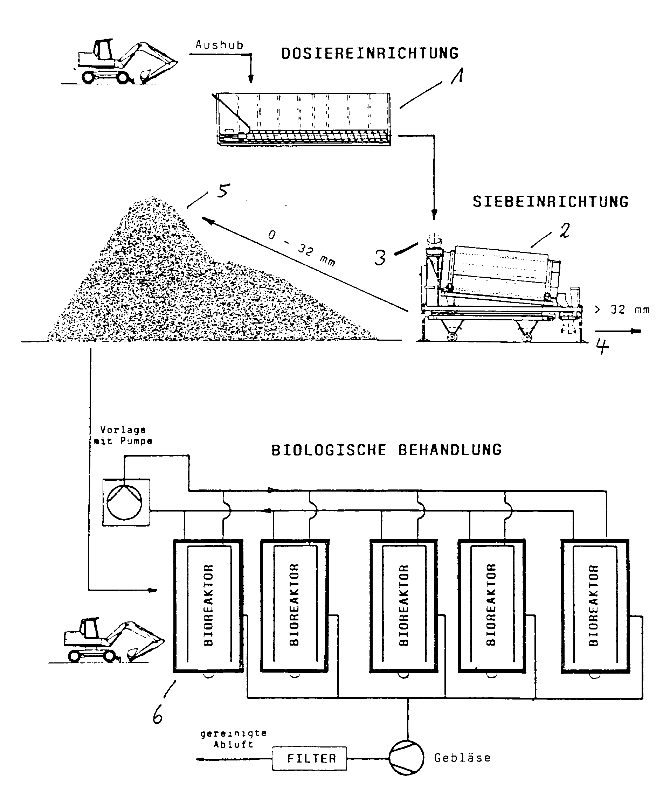

## Patentansprüche

1. Verfahren zur biologischen Reinigung von mit Xenobiotica verunreinigten Böden, wobei die Bodenvorbereitung und die Bodenreinigung in mobilen Behältern erfolgt, dadurch gekennzeichnet, daß
der verunreinigte Boden nach Aussonderung der groben Bodenfraktion in einem Silo-Dosier-Container (1) in einem Siebtrommel-Container (2) homogenisiert und die dabei abgetrennte Feinkornfraktion zur biologischen Reinigung einem Bioreaktor (6) zugeleitet wird.

2. Verfahren nach Anspruch 1 dadurch gekennzeichnet, daß
im Silo-Dosier-Container (1) grobe Bodenfraktionen über 100 mm Durchmesser aussortiert und zerkleinert werden.

3. Verfahren nach den Ansprüchen 1 bis 2 dadurch gekennzeichnet, daß
der Trennschnitt im Siebtrommel-Container bei 32 mm liegt und die abgetrennte grobe Bodenfraktion zerkleinert wird.

4. Verfahren nach den Ansprüchen 1 bis 3 dadurch gekennzeichnet, daß
die Bodenvorbereitung und die Reinigung mit Mikroorganismen in standardisierten, mobilen, stapelbaren, speziell geeigneten Behältern erfolgt.

5. Verfahren nach den Ansprüchen 1 bis 4 dadurch gekennzeichnet, daß
die Bodenvorbereitung in Silo-, Dosier-, Homogenisier-, Siebtrommel- und Mahlaggregaten durchgeführt wird.

6. Verfahren nach den Ansprüchen 1 bis 5 dadurch gekennzeichnet, daß
als Mikroorganismen autochthone oder allochthone anaerobe, vorzugsweise aerobe Bakterien oder Pilze verwendet werden.

7. Verfahren nach den Ansprüchen 1 bis 6 dadurch gekennzeichnet, daß
eine Sickerwasserkreislaufführung am Reaktor (6) vorgesehen ist, die eine leichte und laufende Kontrolle des Schadstoffgehaltes, die Zugabe von Nährsalzen, Wuchsstoffen und Mikroorganismen sowie die Messung der den Abbauprozeß beeinflussenden chemischen Parameter zuläßt und eine optimale Prozeßführung sowie eine Automatisierung mit Prozeßleittechnik ermöglicht.

8. Verfahren nach den Ansprüchen 1 bis 7 dadurch gekennzeichnet, daß
die Sauerstoffversorgung der Mikroorganismen mittels einer Saugbelüftung über die Bodenoberfläche durch das Erdreich erfolgt.

9. Verfahren nach den Ansprüchen 1 bis 8 dadurch gekennzeichnet, daß
die Reaktoren (6) zur Verhinderung von Schadstoffemissionen in die Umgebungsluft mit einem Belüftungs- und Reinigungssystem verbunden sind, wobei das Belüftungssystem über ein Rohrsystem mit einer Gebläsestation verbunden ist, die aus einem Verdichter besteht und mit einer schallschutzwirksamen Haube abgedeckt ist und die Abluft aus dem Verdichter über einen Aktivkohlefilter oder einen Biofilter, vorzugsweise mit aktivem Stroh-/Pilz-Substrat, geführt wird.

10. Vorrichtung zur Durchführung des Verfahrens nach den Ansprüchen 1 bis 9 dadurch gekennzeichnet, daß
diese aus einer baukastenmäßig zusammengestellten Kombination von Abroll- und/oder Absetzcontainern oder ähnlichen leicht transportablen Behältern besteht, die aus mindestens einem Silo-Dosier-Container (1) mit mindestens einem nachgeschalteten Siebtrommel-Container (2) besteht und sich diesem mindestens ein Reaktorbehälter (6) anschließt.

11. Vorrichtung nach Anspruch 10 dadurch gekennzeichnet, daß
der Silo-Dosier-Container (1) und der Siebtrommel-Container (2) über einen in der Neigung verstellbaren Gurtbandförderer (3) miteinander verbunden sind.

12. Vorrichtung nach den Ansprüchen 10 bis 12 dadurch gekennzeichnet, daß
im vorderen Teil des Siebtrommel-Containers (2) eine Siebtrommel mit auswechselbaren Blechen mit oder ohne Lochung angeordnet ist.

## Claims

1. Method of biologically purifying soils which are contaminated with xenobiotics, the soil preparation and the soil purification being effected in mobile containers, characterised in that the contaminated soil is homogenised in a sieve drum container (2) after the coarse soil fraction has been eliminated in a silo dosing container (1), and the fine grain fraction, separated thereby, is supplied to a bioreactor (6) for biological purification.

2. Method according to claim 1, characterised in that coarse soil fractions with a diameter of more than 100 mm are eliminated and comminuted in the silo dosing container (1).

3. Method according to claims 1 to 2, characterised in that the cross-section of the sieve drum container is 32 mm, and the separated, coarse soil fraction is comminuted.

4. Method according to claims 1 to 3, characterised in that the soil preparation and the purification are effected with micro-organisms in standarised, mobile, stackable, specially suitable containers.

5. Method according to claims 1 to 4, characterised in that the soil preparation is accomplished in silo, dosing, homogenising, sieve drum and grinding units.

6. Method according to claims 1 to 5, characterized in that autochthonic or allochthonic, anaerobic, preferably aerobic bacteria or fungi are used as micro-organisms.

7. Method according to claims 1 to 6, characterised in that a means for guiding a circulation of percolating water is provided on the reactor (6), which means permits a simple and continuous monitoring of the pollutant content, the feeding of nutrient salts, growth substances and micro-organisms as well as the measurement of the chemical parameters influencing the decomposition process, and said means renders possible an optimum operation and automation with processing technology.

8. Method according to claims 1 to 7, characterised in that the oxygen supply for the micro-organisms is effected by means of a suction-type aeration via the soil surface through the ground.

9. Method according to claims 1 to 8, characterised in that the reactors (6) for preventing emissions of pollutants into the ambient air are connected to an aerating and purifying system, the aerating system being connected to a blasting station via a pipe system, said station comprising a compressor and being covered with a soundproof hood, and the waste air is conducted from the compressor via an active carbon filter or a biofilter, preferably having an active straw-cum-mushroom substrate.

10. Apparatus for accomplishing the method according to claims 1 to 9, characterised in that said apparatus comprises a unit assembly combination of roller and/or receiving containers or similar easily transportable containers, which combination comprises at least one silo dosing container (1), having at least one subsequently added sieve drum container (2), and at least one reactor container (6) communicates with said sieve drum container.

11. Apparatus according to claim 10, characterised in that the silo dosing container (1) and the sieve drum container (2) are interconnected via a belt conveyor (3), which is adjustable in respect of inclination.

12. Apparatus according to claims 10 or 11, characterised in that a sieve drum, having interchangeable plates with or without perforation, is disposed in the front portion of the sieve drum container (2).

## Revendications

1. Procédé pour la dépollution biologique de sols pollués par des xénobiotiques, selon lequel la préparation et la dépollution du sol se font dans des récipients mobiles, caractérisé en ce que le sol pollué, après un tri de la fraction de sol grossière dans un conteneur de dosage à trémie (1), est homogénéisé dans un conteneur à tambour cribleur (2), et la fraction à grains fin séparée est amenée vers un bioréacteur (6) en vue de la dépollution biologique.

2. Procédé selon la revendication 1, caractérisé en ce que les fractions de sol grossières présentant un diamètre supérieur à 100 mm sont triées et broyées dans le conteneur de dosage à trémie (1).

3. Procédé selon les revendications 1 à 2, caractérisé en ce que la section de séparation dans le conteneur à tambour cribleur est de 32 mm et la fraction de sol grossière séparée est broyée.

4. Procédé selon les revendications 1 à 3, caractérisé en ce que la préparation du sol et la dépollution se font à l'aide de microorganismes dans des récipients normalisés spécialement adaptés, mobiles et superposables.

5. Procédé selon les revendications 1 à 4, caractérisé en ce que la préparation du sol est effectuée dans des agrégats de trémie, de dosage, d'homogénéisation, de tambour cribleur et de broyage.

6. Procédé selon les revendications 1 à 5, caractérisé en ce qu'on utilise comme microorganismes des bactéries ou des champignons autochtones ou allochtones anaérobies, de préférence aérobies.

7. Procédé selon les revendications 1 à 6, caractérisé en ce qu'il est prévu, au niveau du réacteur (6), une circulation d'eau de filtrage qui autorise un contrôle facile et continu de la teneur en substances nocives, l'adjonction de sels nutritifs, de substances de croissances et de microorganismes, ainsi que la mesure des paramètres chimiques influençant le processus de décomposition, et qui permet une gestion optimale du processus et une automatisation à l'aide d'une technique de gestion de processus.

8. Procédé selon les revendications 1 à 7, caractérisé en ce que l'alimentation des microorganismes en oxygène se fait à l'aide d'une aération par aspiration sur la surface du sol, à travers la terre.

9. Procédé selon les revendications 1 à 8, caractérisé en ce que pour empêcher l'émission de substances nocives dans l'air environnant, les réacteurs (6) sont reliés à un système d'aération et de dépollution, étant précisé que le système d'aération est relié par l'intermédiaire d'un système de tuyauterie à un poste de soufflerie qui se compose d'un condensateur et est couvert par un capot agissant comme insonorisation, et que l'air sortant du condensateur passe par un filtre à charbons actifs ou un filtre biologique comportant de préférence un substrat actif paille/champignons.

10. Dispositif pour la mise en oeuvre du procédé selon les revendications 1 à 9, caractérisé en ce qu'il se compose d'une combinaison à assemblage modulaire de conteneurs pouvant rouler et/ou pouvant être déposés ou de récipients facilement transportables semblables, laquelle combinaison comprend au moins un conteneur de dosage à trémie (1) et au moins un conteneur à tambour cribleur (2) monté en aval, auquel fait suite au moins un récipient réacteur (6).

11. Dispositif selon la revendication 10, caractérisé en ce que le conteneur de dosage à trémie (1) et le conteneur à tambour cribleur (2) sont reliés par un convoyeur à courroie (3) à inclinaison réglable.

12. Dispositif selon les revendications 10 à 12, caractérisé en ce qu'un tambour cribleur à tôles échangeables perforées ou non est disposé dans la partie avant du conteneur à tambour cribleur (2).
